# EUROPEAN PATENT SPECIFICATION

(11) **EP 0 772 657 B1**
(45) Date of publication and mention of the grant of the patent: **17.03.1999**
(21) Application number: 95927455.6
(22) Date of filing: 26.07.1995
(51) Int. Cl.: C09J 123/08

(54) **HOT MELT ADHESIVE BASED ON EVA AND STYRENE BLOCK POLYMERS**
HEISSSCHMELZKLEBE BASIEREND AUF EVA UND STYROL-BLOCKPOLYMEREN
ADHESIF THERMOFULSIBLE A BASE D'ACETATE D'ETHYLENEVINYLE ET DE BLOCS POLYMERES DE STYRENE

(30) Priority: 26.07.1994 US 280695
(43) Date of publication of application: 14.05.1997
(73) Proprietor: EXXON CHEMICAL PATENTS INC., Baytown, TX 77520-2149 (US)
(72) Inventor: LUVINH, Quoc, B-1080 Brussels (BE)
(74) Representative: Dew, Melvyn John
(86) International application number: US9509428
(87) International publication number: WO9603470

(56) References cited:
- EP-A- 0 413 137
- US-A- 4 345 349
- US-A- 5 120 781

## Description

### Technical Field

This invention relates to adhesive blend compositions including ethylene-vinyl acetate copolymers, styrene block polymers, hydrocarbon tackifying resins, extenders such as wax, and stabilization agents such as antioxidants and u.v. stabilizers.

### Background of the Invention

Hot-melt adhesives are thermoplastic materials that can be heated to a melt and then applied to various substrates. A bond is formed upon cooling and resolidification. Among the most widely used thermoplastic polymers in hot-melt adhesives is ethylene-vinyl acetate copolymer ("EVA") which is combined with a variety of plasticizers, tackifiers, antioxidants, and extenders for purposes of improving and/or controlling the viscosity adhesive properties, shelf-life stability and cost. Plasticizers have typically included such compounds as polybutenes and phthalates, tackifiers have typically included such compositions as rosin esters and hydrocarbon resins, antioxidants are frequently based upon the known hindered phenol compounds, and wax is typically the most important extender, serving to reduce melt viscosity in addition to reducing costs. These hot-melt adhesives have the drawback of often becoming brittle below the glass-transition temperature. Thus the use of hot-melt adhesives based upon EVA is limited when low temperature conditions of use are desired.

Styrene block copolymers ("SBC") are independently known as an important class of base polymers for adhesive compositions, particularly for such uses as in hot melt pressure sensitive adhesives in tapes, label stock, diaper assembly and the like. However, because of higher melt viscosities than EVA based compositions, SBC based adhesive compositions are not typically used for packaging where high speed application is economically desirable. EVA based hot-melt adhesive compositions thus remain the principal choice for packaging.

Certain adhesive composition blends of SBC and EVA are known, even though the base polymers are largely incompatible, in the sense of not being able to form stable blends largely free of separation or stratification and resulting nonuniformity of properties. US patent 4,345,349 describes book-binding hot-melt adhesive compositions prepared from 15-30% SBC, 5-10% EVA, 25-40% rosin ester tackifier, 25-35% wax diluent and 0.5-3% of a stabilizer, e.g., hindered phenol compound. The ratio of SBC to the ethylene vinyacetate copolymer is from 1.75/1 to 6/1. The low-temperature flexibility is said to be improved by increasing the amount of SBC in the composition and setting speed is shortened by using a high softening point tackifier or high melting point wax. Setting time, in order to be useful in the described book-binding process, is to be within 30 seconds, and times within 26 seconds are exemplified. US patent 4,394,915 describes a hot melt adhesive particularly suitable for polyethylene-terepthalate bottle assemblies comprising typically 20-40% SBC, 5-20% EVA, 30-60% tackifying resin, 10-30% wax or oil, and 0.1-4% stabilizer. The tackifying resin can be any of a number of available rosins or resins, including the aliphatic petroleum resins, but is preferably a polymerized tall oil rosin. Setting speeds of less than 6.5 seconds are targeted for the bottle assembly operation.

US patent 5,118,762 addresses the industrial need for hot melt adhesives that have a low melt viscosity and high temperature resistance to shear. The solution in this document is the use of a predominantly branched styrene-isoprene-styrene (SIS) triblock copolymer with a tackifying resin that is compatible with the elastomeric isoprene block, e.g., diene-olefin copolymer resins, rosin esters or saturated petroleum resins, e.g., hydrogenated dicyclopentadiene resins such as ESCOREZ® 5000 series resins of Exxon Chemical Company.

It is also desirable in packaging to have adhesive compositions that have suitably low melt viscosity for high speed automated coating processes, a sufficiently long time before hardening to preserve sufficient adhesion (known in industry as "open time") in assembly operations such as box closures, yet a quick enough setting speed to allow shortest time application of adhering pressure (known in industry as "setting time"). Further, it is desirable to extend the applicability of EVA compositions to lower the temperature ranges within which such can be effectively used.

### Invention Disclosure

The invention is an EVA hot-melt adhesive composition exhibiting improved low temperature flexibility and adhesive properties while retaining good processing properties, good open times, and equivalent or decreased setting speeds. It is typically characterized by comprising 20 - 50 wt.% ethylene vinyl acetate, an effective amount of styrene block copolymer, typically in amounts about or less than 15 wt.% based upon total composition weight, and 20 - 60 wt.% tackifying hydrocarbon resin/rosin ester. The composition typically comprises additionally 10 - 50 wt.% of a wax compatible with the ethylene vinyl acetate and 0.5 - 3 wt. % of a stabilizing additive. A preferred SBC is an SIS polymer, preferably having a diblock (SI) content of less than 6 wt. % based upon the total weight of the SIS polymer. A preferred tackifying hydrocarbon resin is an aliphatic-aromatic resin, preferably having from 10 - 40 wt.%, of total resin number-average molecular weight, of aromatic monomer.

### Best Mode and Examples of the Invention

The terms "ethylene-vinyl acetate" or "EVA" as used in the claims and description are used in view of the preferred use of that copolymer in hot-melt applications, however it is also meant to be representative of the ethylene-vinyl ester copolymers wherein the vinyl ester comonomer is typically a C₂ - C₆ ester, for example, methylacrylate, ethylacrylate, or butylacrylate. Typically the ester content will be about 18 to 40 wt.%, preferably about 25 - 35 wt. %. The melt index ("MFI") (gram flow/10 min., ASTM D 1238 - 82 Cond. E) will typically range between 2 and 2500, more typically 150 to 2500, preferably 150 - 400. The EVA can be either of the high or low alkyl-branch containing copolymers conventionally known in the art, see for example EP-A-0 348 200. The commercially available EVA ESCORENE® UL 15028 (MFI = 150, vinylacetate 28 wt. %) from EXXON CHEMICAL COMPANY is typical.

The ethylene-vinyl acetate component makes up a principal part of the adhesive composition of the invention. Typically that amount will be greater than about 20 wt. %, based on the total blend weight, preferably greater than about 25 wt. %, and most preferably greater than about 30 wt. %. The amount is typically less than about 50 wt. %, preferably 45 wt.%, or lower. Thus an amount between 30 and 45 wt. % will be particularly useful. When formulating a good rule of thumb is to maintain a ratio between the EVA and SBC of greater than about 2/1, for example 3/1, of EVA/SBC.

The styrene block copolymer of the invention can be any of the commercially available A-B-C type SBC, where as is conventional, the A and C blocks are of the same or different alkenyl arenes and the B block is of one or more conjugated dienes. These will include those of the formula (A-B)ₙC, known as radial block or teleblock copolymers, and multiblock copolymers. Typically the alkenyl arene is styrene or alkyl substituted styrene and the conjugated diene is either of isoprene or butadiene or a mixture of them. These SBC may be hydrogenated or partially hydrogenated which in the case of an styrene-butadiene-styrene copolymer results in saturated -ethylene-butene- segments in the B block. Triblock SIS (styrene-isoprene-styrene) is preferred in view of the tendency of incompletely hydrogenated SBS (styrene-butadiene-styrene) to cross-link at high processing or use temperatures, but under lower temperature conditions the SBS will serve the purposes of the invention. The "pure" triblock SIS, that is having less than 4-6 wt.% of added or residual diblock S-I based upon the total weight of the SIS component is most preferred, appearing to have benefits of improved setting times and lower melt viscosities. Such are typically provided by high efficiency coupling reaction of diblock A-B, usually difficult to achieve in industrial practice, or by sequential anionic polymerization of the A block, then B block and then C block or by using difunctional initiator. Anionic polymerization of SBC is well-known see, for example, US patents 3,786,116, 3,842,146, 4,950,721, EP-A-0 525 905 and US patent 5,118,762, all of which are incorporated by reference for purposes of U.S. patent practice.

The melt flow rate (in g/ 10 min. as measured under ASTM D1238 - 82 G at 200° C. with 5 kg. weight) of the SBC can be as high as is currently commercially available and the examples of this application illustrate the benefits of the invention where as high as 100 g/10 min. The lower the melt flow rate the greater will be the melt viscosity, however as shown in the examples, as low as 13 g/10 min. is operable in accordance with the invention. Accordingly, the melt flow rate of the SBC will typically range from 8-150, preferably 13-60, and above.

SBC within the description of the above paragraph are available commercially, for example the block copolymers under the tradenames KRATON ® or CARIFLEX® of Shell Chemical Co. which are typically low to medium styrene content (about 15 - 24 wt.%) and of about 150,000 molecular weight. The multiblock SBS copolymer under the tradename STEREON® 840A of Firestone Tire and Rubber Co. is of higher styrene content (about 42 wt.%) and of lower molecular weight (about 78,000). The triblock copolymers under the tradename VECTOR® of Dexco Polymers, U.S.A. are particularly suitable. The pure triblock SIS VECTOR® 4211 (0 wt.% diblock, 13 melt flow rate) and 4411-D (0 wt.% diblock, 40 melt flow rate), and the pure triblock SBS VECTOR® 4461-D (0 wt.% diblock, 23 melt flow rate), having respective styrene contents of approximately 29%, 44% and 43%, based upon total polymer weight, are preferred. The selection of SBC having 20 - 45 wt.% medium to high styrene contents, preferably 25 - 45%, is particularly preferred in that it provides benefits in lower melt viscosities, high heat resistance and holding power.

An "effective amount" of SBC is that which achieves low-temperature flexibility without increasing the melt viscosity of the blend composition, at application temperature, to unacceptably high levels for the packaging or other adhesive application equipment being used. Such can be empirically derived within conventional knowledge in the art and as exemplified in this application. Where the SBC is a triblock with low amounts of diblock, as described above, typically that amount will range between about 4 to about 15 wt.% based upon the weight of the blend composition, more preferably 5 to less than about 15, most preferably 5 - 10 wt. %. The amount to be used for packaging is that so as to retain a Brookfield viscosity (180° C.) of less than about 6000 mPa., preferably less than about 5000 mPa, most preferably less than about 4000 mPa. Higher melt viscosities can be tolerated where the adhesive compositions of the invention are to be used for assembly purposes, e.g., wood working such as furniture assembly.

The hydrocarbon tackifying resins useful in the invention includes any of those that are compatible with the EVA and SBC. Thus where US patent 5,118,762 teaches use of aliphatic tackifiers compatible with the isoprene block of its SBC, this invention preferably uses a tackifier compatible with the vinyl acetate portions of the EVA and the styrene blocks of the SBC so as to provide a co-compatilibilization affect for the two dissimilar base polymers. In particular, those resins containing a significant portion of aromatic monomer will be suitable, such will include the nonhydrogenated and partially hydrogenated aromatic resins and aromatic modified aliphatic resins. Rosin esters may also be used. For example the C₅/C₉ resins, any of the C₄, C₅ and/or C₆, and/or terpene, containing resins that also contain a significant portion of C₈, C₉ and/or C₁₀ monomers, e.g., styrene or alkyl-substituted styrene monomers will be suitable. Such are available commercially as nonhydrogenated or hydrogenated hydrocarbon resins prepared by Friedel-Crafts polymerization and if hydrogenated, by conventional metal-catalyzed hydrogenation. Monomers can be provided as pure monomer streams, or pure monomer in solvent, or steam-distilled petroleum fractions, for example, heart cut distillate. Methods of preparing the hydrocarbon resins are well-known, see for example, US patent 3,926,878, US patent 4,078,132, EP-A-0 23 456, EP-A-0 175 593, WO-A-9107472. See also co-pending US patent application Serial Number 08/148,137 and its equivalents. Each is incorporated by reference for purposes of U.S. patent practice. See also, Encyclopedia of Polymer Science and Engineering, vol. 7, 758-782 (J. Wiley & Sons, 1987).

Preferred resins are the aromatic modified aliphatic C₅/C₉, aromatic modified terpene resins or aromatic aliphatic modified terpene resins prepared with or from steam-cracked petroleum fractions and having number-average molecular weights (Mₙ) less than or equal to 900, viscosity-average molecular weights (M_{z}) less than or equal to 3000, a molecular weight distribution (MWD) less than or equal to 2.1, and an aromaticty of 10-40 wt.% aromatic monomers based on total resin number average molecular weight (as measured by NMR in accordance with that described in WO-A-91/07472), preferably 15-35 wt.%. Resins of similar monomers meeting these physical parameters will be also be particularly suitable. Commercially available resins that are suitable include the Escorez® 6000 resins of Exxon Chemical Company, particularly the C₅/C₉ resins ECR 385 and the ECR 368, ECR 372B and ECR 165 resin products. See also, the resins described in US patent 5,171,793. This patent is similarly incorporated by reference for purposes of U.S. patent practice. The most suitable resins have a softening point (Ring & Ball) of 50 - 120° C., preferably 70 - 105, and most preferably 80 - 105. Below about 50° C. softening point the resins can cause undesirable loss of heat resistance for the adhesive compositions of the invention.

The hot melt adhesive compositions of the invention preferably will contain from 30-60 wt.%, more preferably 35 - 45 wt.% tackifying resin.

The wax component of the invention adhesive compositions will be any of those conventionally known for use with EVA in hot melt adhesive compositions. Exemplary petroleum derived synthetic waxes are paraffin and microcrystalline waxes having melting points within a range of from about 55° C. to about 110° C. as well as low molecular weight polyethylene and Fischer-Tropsch waxes. The wax content is preferably 10 - 35 wt.% of the total blend composition. Plasticizers, pigments and fillers may be used along with or in place of a portion of the wax. Plasticizer oils can be used, see US patent 5,143,968 for description of suitable oils.

The stabilizing additive, antioxidant, and/or U.V. stabilizers used in accordance with the invention, typically include such hindered phenols and multifunctional phenols as known conventionally and as described in the literature, see for example, US patent 5,143,968. This patent is expressly incorporated by reference for purposes of U.S. patent practice for its teachings as to SBC, antioxidant stabilizers and plasticizer oils. Preferably the stabilizer will be 0.1 - 3 wt.% of the invention compositions, more preferably 0.3 to 2.0 wt.%, based upon the total weight of the adhesive composition.

Typical industrial applications include packaging, particularly for low temperature use such as for dairy products or for freezer packaging of food products, and in sanitary disposable consumer goods, for example, diapers, feminine care pads, napkins, etc. However, even more traditional end use applications such as book-binding, wood working and labeling will also benefit from both the low temperature flexibility and the efficiency of use in automated means of applying the invention compositions to the various art-recognized substrates or adherends.

The adhesive compositions of the invention are prepared by melt blending at temperatures above the melting point of the highest melting polymer component but below temperatures at which degradation is observed to commence, typically up to 180 °C. Such blenders as the z-blade types, for example the Winkworth mixers, are suitable. Typical blending time is 50-60 minutes. Any order of addition of components can be followed, but typically the higher melting SBC is added first followed by gradual addition of EVA and tackifier, preferably together. The wax and/or plasticizer oil is typically added after 20-25 minutes from the beginning of the blending procedure. Stabilizers are added concurrently or before. The well-mixed blend is upon completion typically poured into siliconized boxes for cooling and shipping.

The hot melt adhesive compositions may be applied to the desired substrate or adherend in any manner known in the art, particularly those methods used traditionally for packaging. Typically a coating head or nozzle, with associated equipment, for example those manufactured by Nordson, are used. The compositions can be applied as fine lines, dots or spray coatings, in addition to other traditional forms as desired.

The following examples are presented to illustrate the foregoing discussion. All parts, proportions and percentages are by weight unless otherwise indicated. Although the examples may be directed to certain embodiments of the present invention, they are not to be viewed as limiting the invention in any specific respect.

The T-Peel test is conducted by laminating a noncoated substrate and a substrate coated with the hot melt adhesive composition. The substrates are 10 x 25 cm. Heat sealing of the substrates is conducted for polyethylene substrates (PE/PE) at 110 °C and for aluminum (A1/A1) at 150 °C, both subjected to a pressure of 113 psi (780 kPa) for 30 seconds. The laminate is cooled to room temperature, and for lower temperature testing is cooled further after a period of at least 1 day. Measurement was conducted using a ZWICK 1445 Tensile Tester to determine and record the peel resistance to separation of the laminates over a length of at least 60 mm. Adhesive failure (AF) is separation at the interface of adhesive and substrate leaving no residue. Cohesive failure (CF) is separation within the adhesive. Jerking (J) is when both failure conditions are present. The reported result is typically the average of 3 test specimens of a given sample.

Cold Flexibility is measured by preparing solid samples (28 g. each) of the hot melt adhesive composition in rectangular containers of MYLAR™. The samples were heated to 130° C until all air bubbles were removed. The sample blend was placed in a spacer between MYLAR™ film sheeting. The spacer was an aluminum frame 1 mm thick having a 16 x 16 cm ² opening. The spacer was placed in a heated (120 °C) press which was gently closed on the spacer for 2 - 3 minutes and then incrementally subjected to increasing pressures of 3t., 6t., and finally 10t. The pressed blend was removed and cooled in water after which the MYLAR™ film was removed. The samples were conditioned for period of 1 hour to 7 days after being cut into test strips of 5 mm width. A cold flex tester comprising a cylinder and clip for the test strips was cooled to test temperature and maintained at that temperature for 3 hours with the test strip in place. The strip was then bent smoothly around the cylinder. The test was repeated until the temperature at which cracking occurs was observed. The reported value is typically the average of 5 tests for each single sample.

Brookfield Viscosity was measured in accordance with ASTM D-3236.

Hot Shear was measured by suspending a 1000 gram weight from a 25 mm wide strip MYLAR™ polyester film coated with the adhesive formulation which was adhered to a stainless steel plate surface with a contact area of 12.5 mm. x 25 mm. The sample was placed in a ventilated oven at a starting temperature of 40 °C after which temperature was increased 10 °C every 30 min. Time and temperature were recorded until stress failure occurred. The reported value was typically the average value of 3 test specimens from a given sample.

Shear Adhesion Failure Temperature (SAFT) was determined by adhering a coated MYLAR™ strip of 25 mm. width to stainless steel with a contact area of 12.5 mm. x 25 mm., hanging the samples in an oven held at 25 °C and suspending a 500 gram weight from the bottom of the strip. The temperature was raised at 0.4 °C/min and the bond failure temperature was measured. The Shear Adhesion Failure Temperature is the average of three tests.

Open Time and Setting Time were measured by use of the test equipment from OLINGER. A weighed amount (45 - 55 mg.) of adhesive composition was applied from a hot melt applicator from MELTEX fitted with a 0.3 mm orifice nozzle. The timer was from EAGLE SIGNAL. The hot melt adhesive was applied as a fine line on two cardboard substrates. These substrates were mounted in the clamps of the OLINGER, pressed together (1.5 bar) and allowed to bind, with fixed Set Time or Open Time. After the Set Time had elapsed the clamps were opened to destroy the adhesive bond. The procedure was repeated 5 times. The force to separate the two cardboard substrates was measured and analyzed with the machine software program. These were graphed by the machine, Open Time and Setting Time were calculated from the graphs.

### EXAMPLES

A series of adhesive compositions both within and outside (with 0 wt.% SBC) the scope of the invention were prepared by mixing ingredients as set forth in Tables 1-4 in a two blade mixer at 180 °C for a period of 70 minutes. The composition was then heated to about 150 °C and the melt was pumped through a coating die onto either a 36 micron MYLAR™ polyester film or the laminate substrate to be coated. The dry weight of the applied coating layer was 100 ± 5 g/m. After coating, the adhesive was covered with the substrate, polyethylene (PE) or aluminum (Al), and the procedures above applied.

In the tables below, the following terms mean:

| | |
|---|---|
| PE = | polyethylene |
| MP = | melting or softening point |
| AO = | antioxidant, Irganox® 1010 of Ciba-Geigy |
| L = | elongation (% increase of length) |
| F = | tensile strength (N/mm²) |

Coating weights on cardboard for testing of Open Time and Setting Time was 45 mg (± 5 mg.) / 5 cm.

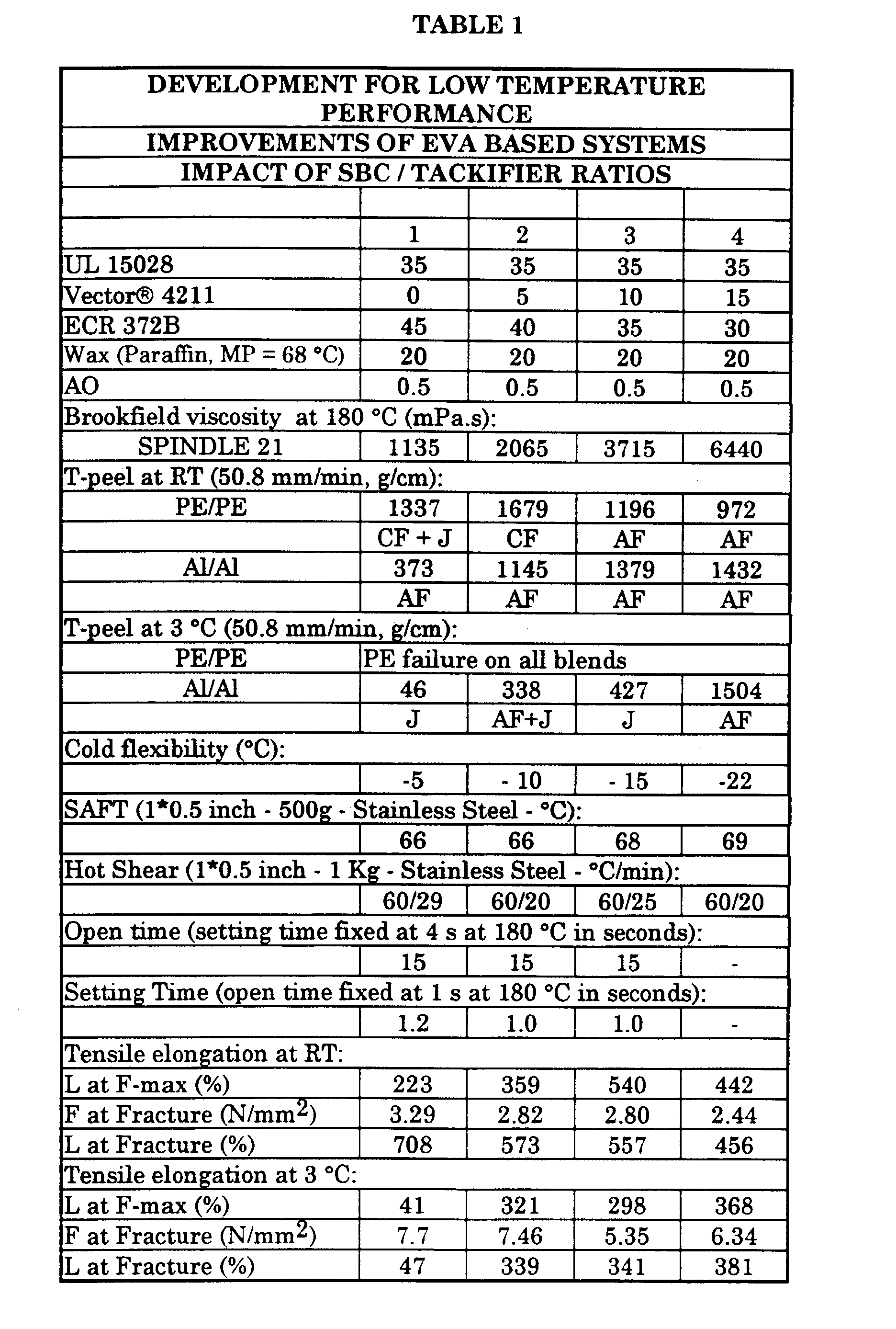

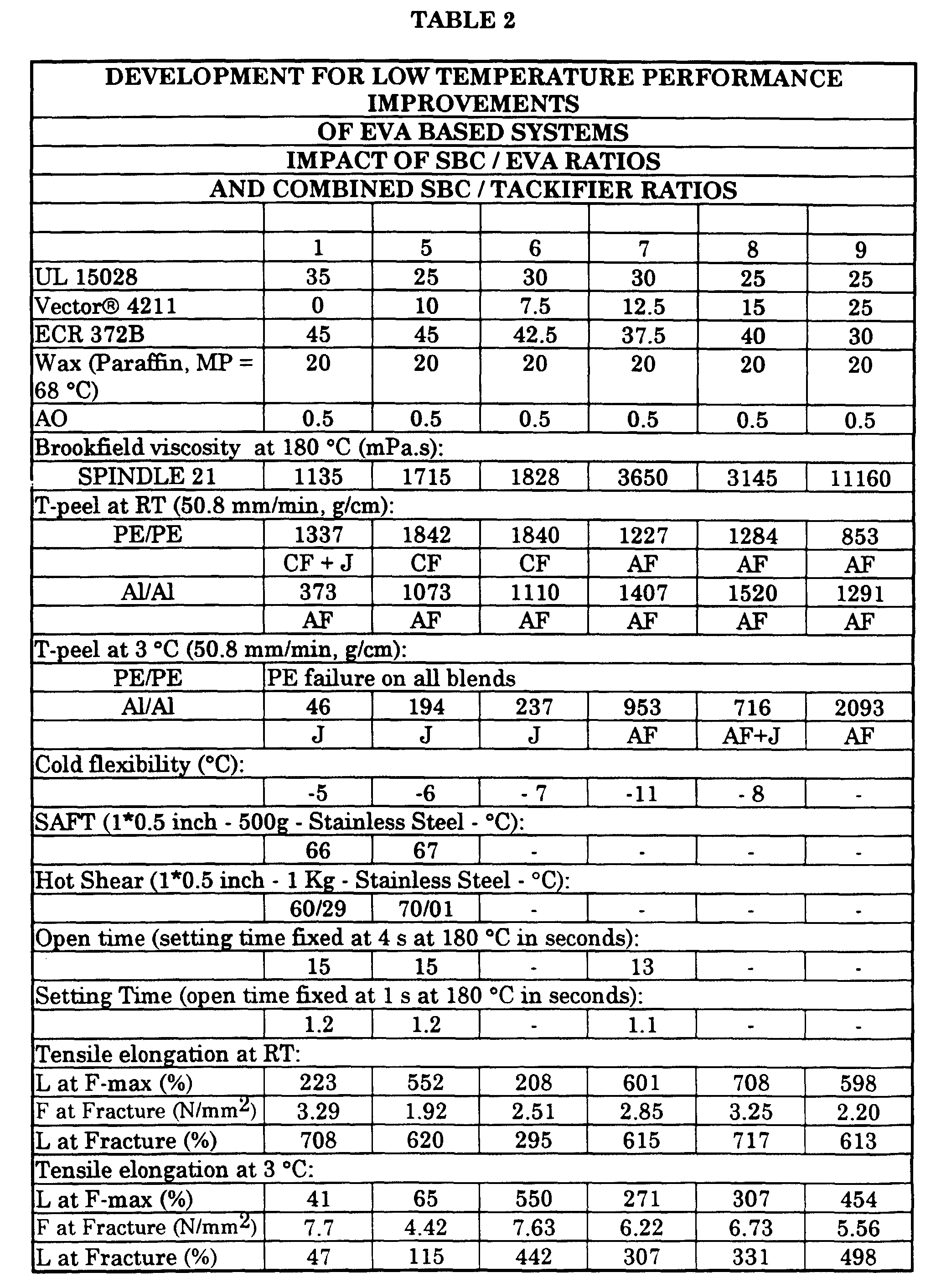

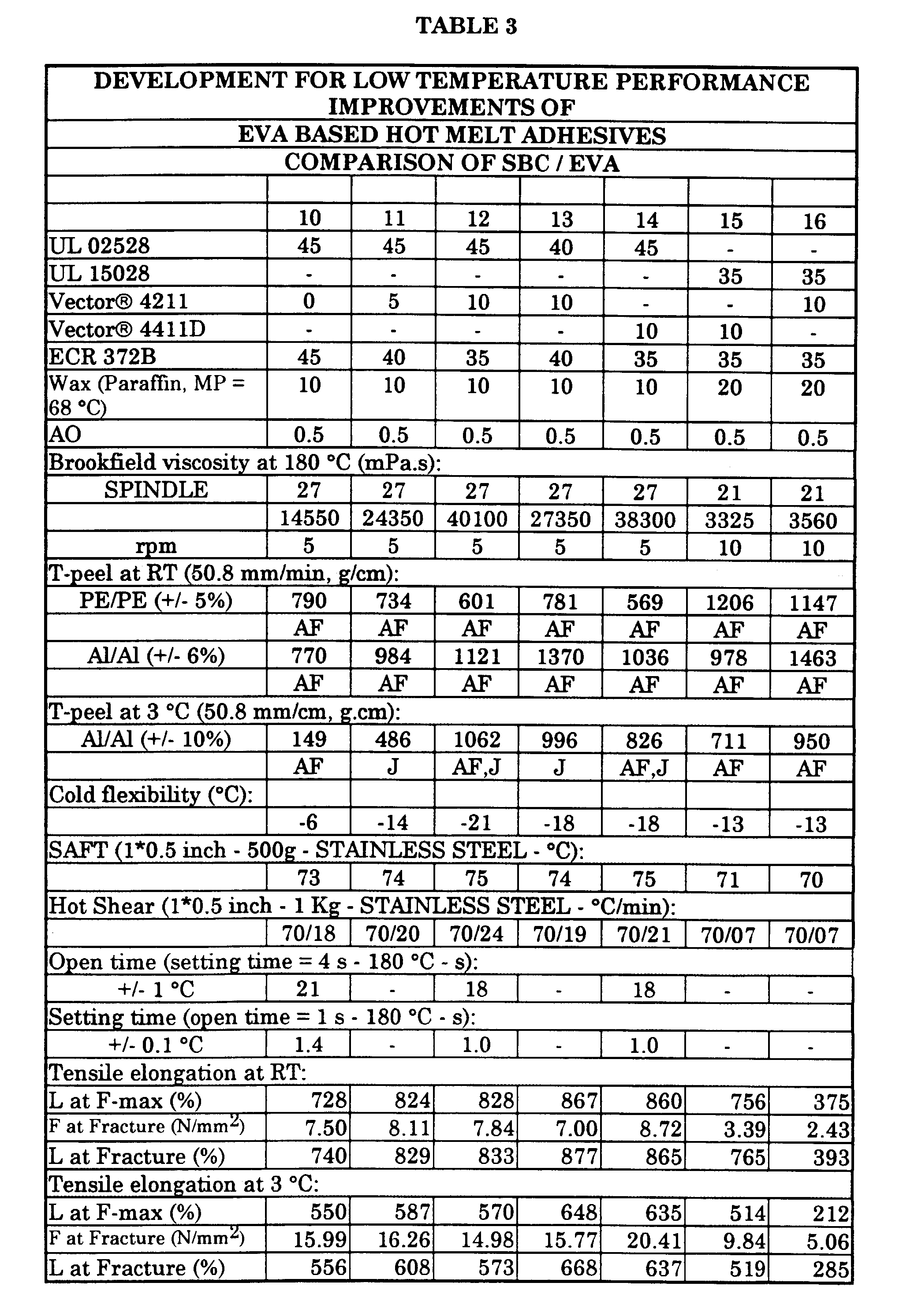

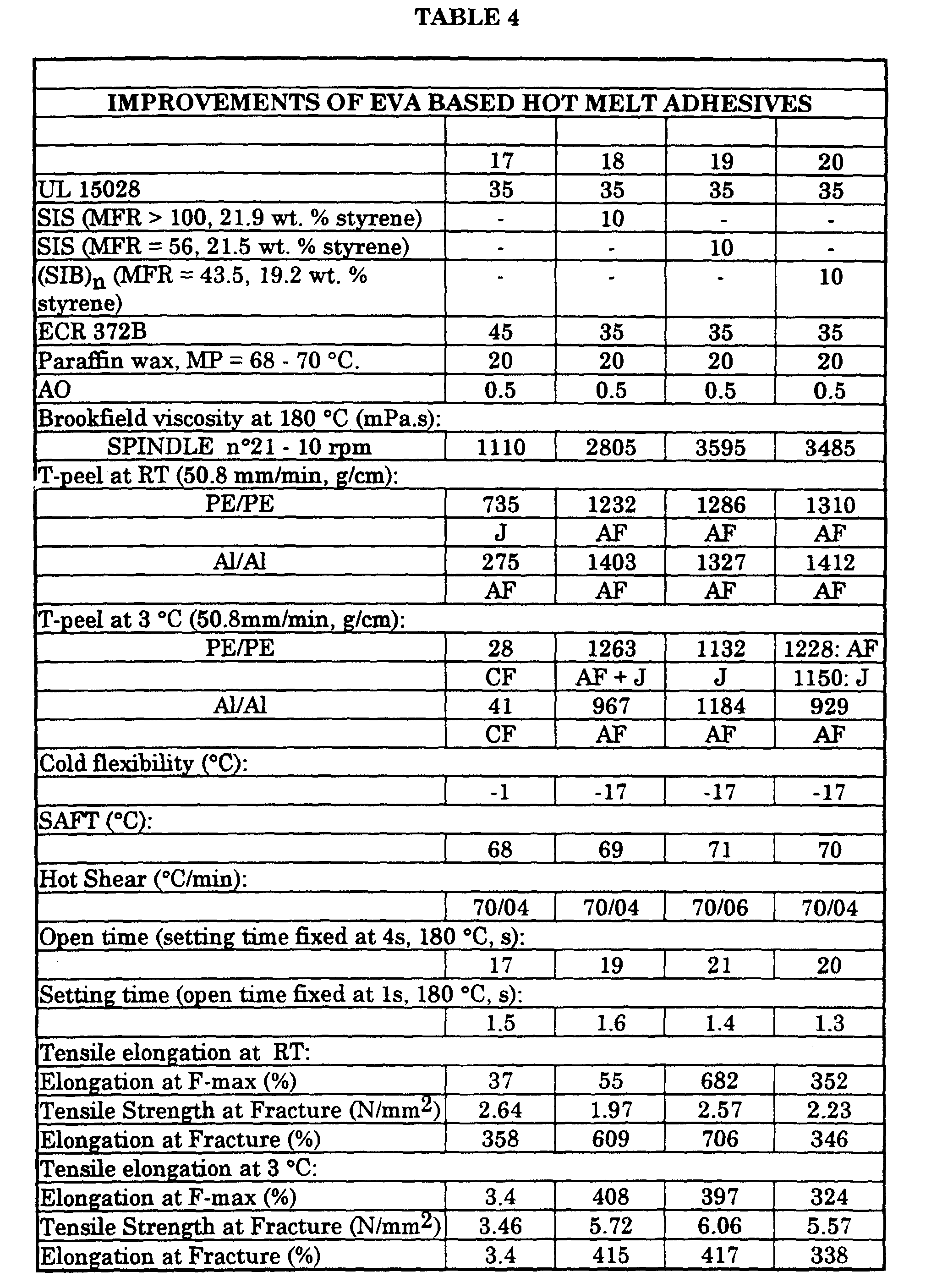

The Examples above illustrate significantly improved mechanical properties, particularly the cold flexibility and the elongation at break at low temperature. Additionally, the adhesion is also improved as reflected by T-peel measurements. Yet, the hot melt performances at high temperature (heat resistance) are not significantly affected as shown by their Shear Adhesion Fail Temperature (SAFT) and Hot Shear tests. In addition, the open time and setting time (i.e. the packaging machine speed) are equal or better. The trade-off of higher hot melt adhesive blend viscosities observed represent only a small drawback as they are still within the capability range of typical hot melt machinery at typical application temperatures.

Specifically each of the Examples 2 - 8, 11 - 16 and 18 - 21 show the improved low temperature flexibility compared to Examples 1, 9, 10, and 17. T-Peel at low temperatures for aluminum show improvement with all invention examples. Open and setting times remained equivalent or improved slightly (i.e., shorter Setting Time and longer Open Time). Examples 18 - 20 illustrate the invention with high melt flow rate (MFR) SIS and with a radial styrene-isoprene block copolymer containing a small amount of butadiene copolymerized prior ((SIB)ₙ) to coupling as described in U.S. patent 5,292,819.

### EXAMPLE 21

In formulations equivalent to the Example 3 of the Table 1 different SBC were observed and are reported in Table 5

**TABLE 5**

| Block Copolymer | Styrene wt.% | Diblock wt.% | Setting Time (sec.) | Cold Flexibility (°C) |
|---|---|---|---|---|
| Vector® 4114 | 15 | 42 | 3.5 | -17 |
| CARIFLEX® TR 1107 (Shell Chemical) | 15 | 18 | 4 | -22 |
| KRATON® D 1125 (Shell Chemical) | 30 | 18 | 3.5 | -17 |
| Vector® 4211 (Dexco Polymers) | 29 | 0 | 1 | -17 |

The advantage of using the triblock SIS with low diblock content (Vector® 4211) versus the SBC polymers containing more diblock is apparent since the setting time is significantly lower. This feature is important for the coating and packaging machine speed (faster closure of the boxes), particularly when the composition containing the Vector® 4211 is compared to the one containing the KRATON® D 1125, both having similar styrene content. All the compositions show better cold flexibility than those without any block copolymer (Ex. no. 1, Table 1, cold flexibility -5 only).

In the following claims which represent the invention in specific embodiments, each dependent embodiment for each of the below independent embodiments may be practiced with one or more of the limitations of the other dependent embodiments so as to represent other operable embodiments within the scope of the invention claimed.

## Claims

1. A hot-melt adhesive composition characterized by comprising from 20 to 50 wt.% ethylene vinyl acetate, 4 - 15 wt. % of styrene block copolymer, and 20 - 60 wt.% tackifying hydrocarbon resin.

2. The composition according to Claim 1 additionally comprising 10 - 35 wt.% of a wax compatible with the ethylene vinyl acetate.

3. The composition according to Claim 1 additionally including one or more stabilizers.

4. The composition according to Claim 1 wherein said styrene block polymer is a styrene-isoprene-styrene (SIS) polymer.

5. The composition according to claim 4 wherein said SIS polymer has 20 - 45 wt.% styrene based upon the weight-average molecular weight of the SIS polymer.

6. The composition according to Claim 5 wherein said SIS polymer has a diblock content of less than 6 wt. % based upon the total weight of the SIS polymer.

7. The composition according to Claim 1 wherein said hydrocarbon resin is an aliphatic-aromatic resin having from 10 to 40 wt.%, of total resin number-average molecular weight, of aromatic monomer as measured by NMR.

8. The use of the composition according to Claim 1 as a packaging adhesive composition for the purpose of improving low temperature flexibility and adhesion to the substrate of the adhesive bond of said packaging.

9. The use of 4 - 15 wt.%, based upon total composition weight, of a styrene block copolymer as an additive for a hot melt adhesive composition based on ethylene vinyl ester copolymer for the purpose of improving low temperature flexibility and adhesion of the adhesive composition in packaging and sanitary disposable articles.

## Patentansprüche

1. Heißschmelzkleberzusammensetzung, dadurch gekennzeichnet, daß sie 20 bis 50 Gew.% Ethylen/Vinylacetat, 4 bis 15 Gew.% Styrol-Blockcopolymer und 20 bis 60 Gew.% klebrigmachendes Kohlenwasserstoffharz umfaßt.

2. Zusammensetzung nach Anspruch 1, die zusätzlich 10 bis 35 Gew.% mit dem Ethylen/Vinylacetat verträgliches Wachs umfaßt.

3. Zusammensetzung nach Anspruch 1, die zusätzlich einen oder mehrere Stabilisatoren einschließt.

4. Zusammensetzung nach Anspruch 1, bei der das Styrol-Blockpolymer ein Styrol-Isopren-Styrol-Polymer (SIS-Polymer) ist.

5. Zusammensetzung nach Anspruch 4, bei der das SIS-Polymer 20 bis 45 Gew.% Styrol aufweist, bezogen auf das durchschnittliche Molekulargewicht (Gewichtsmittel) des SIS-Polymers.

6. Zusammensetzung nach Anspruch 5, bei der das SIS-Polymer einen Diblockgehalt von weniger als 6 Gew.% aufweist, bezogen auf das Gesamtgewicht des SIS-Polymers.

7. Zusammensetzung nach Anspruch 1, bei der das Kohlenwasserstoffharz ein aliphatisch-aromatisches Harz mit 10 bis 40 Gew.%, bezogen auf das durchschnittliche Molekulargewicht (Zahlenmittel) des Gesamtharzes, aromatischem Monomer ist, gemessen mittels NMR.

8. Verwendung der Zusammensetzung gemäß Anspruch 1 als Verpakkungskleberzusammensetzung, um die Tieftemperaturflexibilität und -adhäsion an dem Substrat von der Klebebindung der Verpackung zu verbessern.

9. Verwendung von 4 bis 15 Gew.%, bezogen auf das Gesamtgewicht der Zusammensetzung, Styrol-Blockcopolymer als Additiv für eine Heißschmelzkleberzusammensetzung auf Basis von Ethylen/Vinylester-Copolymer, um die Tieftemperaturflexibilität und -adhäsion der Kleberzusammensetzung in Verpackungen und Einweghygieneartikeln zu verbessern.

## Revendications

1. Composition adhésive thermofusible, caractérisée en ce qu'elle comprend 20 à 50 % en poids d'éthylène-acétate de vinyle, 4 à 15 % en poids de copolymère séquencé de styrène, et 20-60 % en poids de résine hydrocarbonée d'adhésivité.

2. Composition suivant la revendication 1, comprenant en outre 10 à 35 % en poids d'une cire compatible avec l'éthylène-acétate de vinyle.

3. Composition suivant la revendication 1, contenant en outre un ou plusieurs agents stabilisants.

4. Composition suivant la revendication 1, dans laquelle le copolymère séquencé de styrène est un polymère styrène-isoprène-styrène (SIS).

5. Composition suivant la revendication 4, dans laquelle le polymère SIS en question contient 20 à 45 % en poids de styrène sur la base de la moyenne pondérale de poids moléculaire du polymère SIS.

6. Composition suivant la revendication 5, dans laquelle le polymère SIS a une teneur en diséquence de moins de 6 % en poids sur la base du poids total du polymère SIS.

7. Composition suivant la revendication 1, dans laquelle la résine hydrocarbonée est une résine aliphatique-aromatique contenant 10 à 40 % en poids, par rapport à la moyenne numérique de poids moléculaire de la résine totale, de monomère aromatique, comme mesuré par résonance magnétique nucléaire.

8. Utilisation de la composition suivant la revendication 1 comme composition adhésive d'emballage en vue d'améliorer la flexibilité à basse température et l'adhérence au substrat de la liaison adhésive de l'emballage en question.

9. Utilisation de 4 à 15 % en poids, sur la base du poids total de composition, d'un copolymère séquence de styrène comme additif pour une composition adhésive thermofusible à base de copolymère éthylene-ester vinylique en vue d'améliorer à basse température la flexibilité et l'adhérence de la composition adhésive dans l'emballage et dans des articles hygiéniques jetables.
